# EUROPEAN PATENT APPLICATION

(11) **EP 3 496 030 A1**
(43) Date of publication of application: **12.06.2019**
(21) Application number: 17206178.0
(22) Date of filing: 08.12.2017
(51) Int. Cl.: G06T 7/00, G09G 3/00, H04N 17/00

(54) **METHOD AND SYSTEM FOR INSPECTING A DISPLAY DEVICE**

(71) Applicant: Admesy B.V., 6014 CA Ittervoort (NL)
(72) Inventor: Janssen, Marcel Peter Hubert Marie, 6014 CA Ittervoort (NL)
(74) Representative: van der Krans, Arie

(57) **Abstract**

Method for inspecting a display device, comprising providing the display device on a product carrier, positioning the display device in a viewing field of an imaging device, activating the display, capturing an image of the activated display device by the imaging device to obtain a captured image representing the display, determining a display area from the captured image representing the display, and performing an inspection function within the display area.

System for inspecting a display device comprising a product carrier for carrying the display device, activation means for activating the display, an imaging device, arranged relative to the product carrier, for capturing an image of the display device on the product carrier within a viewing angle of the imaging device. The system further comprises a processing unit connected to the imaging device for receiving the captured image and for processing the captured image, wherein the processing unit is provided with computer instructions which when executed in the processing unit perform the steps of the method as described above.

## Description

### DESCRIPTION

### FIELD OF THE INVENTION

The invention relates to a method and system for inspecting a display device.

### BACKGROUND

In electronic apparatuses, wearable or non-wearable, digital display technology is widespread. Television sets, computer monitors, telephones, test equipment, watches, an almost endless list can be conceived wherein displays are used. Such apparatus having a display is referred to below as display device. The displays incorporated in the display devices may be manufactured using LCD technology in combination with backlighting. Alternatively the displays may be manufactured using LED or OLED technology, wherein each pixel of the display is formed by a single light source.

Such displays can come in various shapes and sizes. Most common are rectangular shaped displays, however depending on the application also other, for example non-rectangular, shapes can be conceived, such as round shapes for watches. The digital displays usually have their pixels arranged in arrays which extend in a two dimensional grid towards the display's boundary.

While such displays are being produced in ever growing large numbers, consumers make quality demands to such displays in that images presented on such displays preserve geometric proportions of the original images, and luminance distribution and color distribution over the display must appear uniform to the human eye. In other words mages must be presented without geometrical distortion, the image must be free from dead or dark spots, and luminance and color must be the same all over the display. A common flaw of present display is for example dark corners, and dead pixels.

Moreover, with the ever-growing resolution and thereby increasing number of pixels, dead pixels may be present. In low resolution a single dead pixels may present a disturbing fault for a display, which may be discovered only when the product in which the display is placed is already in use by the consumer.

In high resolution displays however a single dead pixel may not be visible to the human eye, but which may be found when inspected by high resolution inspection camera equipment.

Inspection of digital displays is known in laboratory applications wherein a display is inspected by means of a camera having the display in a fixed relative to the camera, and wherein shape and location are a priori known parameters for the inspection system. Such inspection systems require a teaching method for each specific type and shape of display and a high degree of calibration to meet the demands for adequate quality inspection of the displays. In the art so called 'golden samples', or reference samples are used for this purpose.

With the growing number of applications of digital displays, and corresponding shapes, and production lines of products incorporating the display, the inspection systems according to the state of the art lack the speed for inline inspection, and the flexibility in terms of display orientation and shape during production of the displays. These systems furthermore lack the ability to inspect a display when already installed in the product.

Display inspection systems in the art using golden samples further lack the flexibility to inspect displays in sense a human observer would do it , i.e. displays may be rejected on the basis of dead pixels, where for the human eye the display would be sufficient for its application.

### SUMMARY

It is therefore an object of the present invention to accurately recognize the display area of a display device. This information is than further being used to extract image data of the display to perform optical inspection to overcomes at least one of the disadvantages as set out above.

The object is achieved in a method for inspecting a display device according to claim 1.

The method, comprises providing the display device on a product carrier, positioning the display device in a viewing field of an imaging device, activating the display, capturing an image of the activated display device by the imaging device to obtain a captured image representing the display, determining a display area from the captured image representing the display, and performing an inspection function within the display area.

The display device can be a display suitable for and not limited to any device having a display, such as a telephone, mobile phone, tablet, watch, a television set, laptop etcetera. The display device can also be a display suitable for application in an apparatus, such as mentioned above.

The display is to be inspected on a product carrier. This can be a transport belt, a transportable product holder, a bin, or any device capable of transporting the display device in a manufacturing environment where the devices can be inspected in the production process.

Once the display area is determined, an inspection function can be applied to the pixels within the display area, for determining a luminance non-uniformity image, to detect deficiencies or defects. An output of the display function can be an image wherein defects are indicated of highlighted. Another possible output of the display function can be a signal which represents the acceptance or rejection of the display device which signal may be used within the manufacturing process.

In an embodiment, the determining a display area from the captured image from the captured image comprises equalizing the luminance of the captured image.

The equalizing allows elimination of luminance uniformity problems within the captured image due to for example optical faults.

In an embodiment, the determining a display area from the captured image comprises converting the captured image to a binary image.

This allows a clear distinction between a probable display area and non-display area in the captured and equalized image, wherein high luminance areas probably belong to the display area, and dark or low luminance areas belong to the non-display area. This enables an edge to be detected accurately along a luminance contour of the binary image delimiting the probable display area.

In an embodiment, the method further comprises determining an bounding rectangle from the polygon. This allows standardization of display images to rectangular displays.

In an embodiment, the method further comprises determining a geometrical conversion matrix using the bounding rectangle, and geometrically converting the pixels within the display area using the geometrical conversion matrix to obtain a geometrically normalized image representing the display.

This allows the part of the image within the display area to be geometrically normalized using the geometrical shape of the bounding rectangle.

In an embodiment, the determining a scaling matrix comprises using the geometrically normalized image representing the display and a second reference image, converting the normalized area of the normalized image representing the display using the scaling matrix to obtain a scaled image representing the display.

After geometric conversion and scaling the captured image, i.e. the display area can be treated as a virtual image having its own coordinate system.

In an embodiment, the determining a display area from the captured image comprises determining an edge from the captured image, and determining a polygon from the edge.

This allows the display area to be accurately determined from the captured image and to limit inspection of the display area within the boundaries determined by the edge.

In an embodiment, the performing an inspection function on the display area comprises performing the inspection function within a portion of the captured image enveloped by the polygon. This allows efficient inspection of the display device as defined by the polygon.

In an embodiment, the method further comprises determining a human visualization conversion matrix using a human visual system model, and converting the display area using the human visualization conversion matrix to obtain a human visualization image representing the display.

This enables automatic inspection of a display to allow results comparable to human inspection.

In an embodiment, the performing an inspection function on the display area comprises determining the luminance non-uniformity image from the human visualization image representing the display. This allows automatic inspection of displays comparable to human inspection.

In an embodiment, the method further comprises outputting an inspection function result. This allows a higher level manufacturing process controller to further control the manufacturing process of the display device. When for example defects have been found, the display device may be sorted out of the process and for example be collected in a reject container. Moreover, a process operator may be signaled that defects have been found, allowing human interference of the manufacturing process.

The object is further achieved in a system for inspecting a display device in accordance with claim 13. The system for inspecting a display device comprises a product carrier for carrying the display device, activation means for activating the display, an imaging device, arranged relative to the product carrier, for capturing an image of the display device on the product carrier within a viewing angle of the imaging device. The system further comprises a processing unit connected to the imaging device for receiving the captured image and for processing the captured image, wherein the processing unit is provided with computer instructions which when executed in the processing unit perform the steps of the method as described above.

### BRIEF DESCRIPTION OF THE DRAWINGS

Fig. 1 shows a schematic diagram of a system for inspection of a display device according to an embodiment of the invention.
Fig. 2. shows a block diagram for a method of inspection of a display device according to an embodiment of the invention.
Fig. 3. shows a block diagram for a method of inspection of a display device according to an alternative embodiment of the invention.
Figures 4a - 4c show images used in the method of inspection of a display device according to an embodiment of the invention.
Fig. 5 shows an example of a result from the method of inspection of a display device according to an embodiment of the invention.
Fig. 6 shows another example of a result from the method of inspection of a display device according to an embodiment of the invention.

### DETAILED DESCRIPTION OF EMBODIMENTS

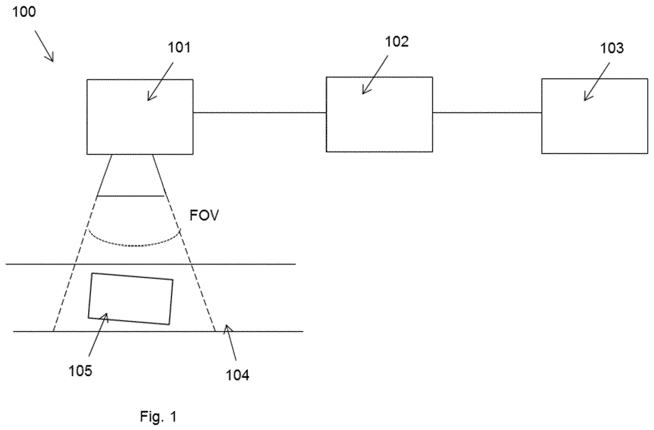

In fig. 1 a schematic diagram of a system 100 for inspection of a display device 105 is shown according to an embodiment of the invention.

The inspection system 100 comprises a camera 101 as an imaging device for capturing images of the display device 105. The camera 101 can be a digital camera having a solid state imaging chip for capturing the image. The camera 101 is provided with analog to digital conversion to digitize the captured image for further digital processing. Likewise also classic imaging tubes may be utilized in combination with dedicated hardware for digitizing the captured image.

The captured and digitized image has picture elements, further referred to as pixels arranged in a matrix fashion. Each pixel represents a luminescence of the captured image at the pixel position. The imaging chip may provide more than one captured image simultaneously, each captured image representing a spectrally filtered image of the display device 105. The spectral filter corresponds to a color.

By having more than one spectrally filtered images corresponding to different colors, an image of the display device can be represented in color space. In the description below, operations performed in the processing of the captured image may refer to a single captured image or to a set of captured images in color space.

The display device 105 may be positioned in an arbitrary orientation facing the camera 101 on for example a product carrier 104. The product carrier 104 may be an industrial product transport belt, however any product carrier may be used. This allows the inspection system 100 to be used in an industrial manufacturing environment. The display device 105 may also be positioned for inspection on a stationary base.

The camera 101 may be mounted on a gantry or mount for providing a field-of-view (FOV) towards the display device 105. The display device may be positioned horizontally, however any position may suffice while the active part of the display device faces the camera, the active part being the display. The display device 105 may be a display used in for example a telephone, tablet or television set or any product having a display. The display device 105 may also be a product having a display incorporated.

For performing the required inspection, the display device 105 needs to be activated. A test image can be shown on the display. The test image is preferably an image having pixels with uniform luminance across the image. To activate the display device 105 and display the test image the display device may be connected by means of a wired or wireless connection to a controller. The display device 105 may be programmed to show the test image.

The camera 101 is arranged for capturing images from the display device 105. The camera 101 may be connected to a processing unit 102 for processing the captured images. The processing unit 102 is provided with a processor and software, such as Nl-Vision™ for performing the processing of the captured images, as will be further detailed below. The processing unit can be and is not limited to a personal computer, an industrial computer, Programmable Logic Controller (PLC) or any controller having a processor, which can be provided with specialized dedicated hardware and instructions for performing operations on captured digitized images. The operations will be further elucidated in the steps of the method 200, and method 300 described below.

The results of the processing can be outputted in an output unit 103, which can be a display for whereby an operator can decide whether the inspected display device 105 complies with previous set conditions or not.

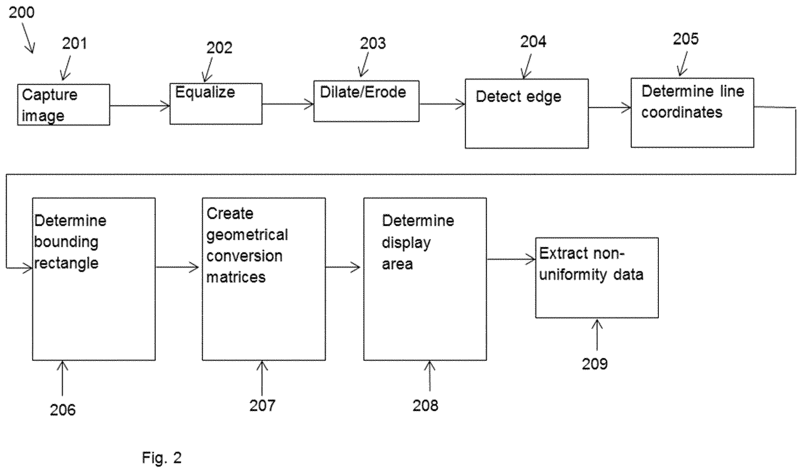

Fig. 2. shows a block diagram for a method 200 of inspection of a display device according to an embodiment of the invention. The steps of the method may be performed with the software as described.

In a first step 201 an image of the display device 105 is captured by means of the camera 101. The captured image is transferred to the processing unit 102.

In step 202, the captured image pixels can be equalized to obtain a normalized contrast in the captured image, which may include at least one of scaling of the pixels luminance in a range between zero and maximum intensity. With a threshold applied to the normalized image, a binary image can be created, wherein for example the 1's represent the display area and the 0's represent the remaining part of the image, or vice versa.

In step 203 edges within the along binary image are dilated by using a smoothing operator as shown in the table below. The operator is also known as a dilation operator. The dilation operator smoothes the edges.

**Table 1, edge dilation operator.**

| | | | | |
|---|---|---|---|---|
| 1 | 1 | 1 | 1 | 1 |
| 1 | 2 | 2 | 2 | 1 |
| 1 | 2 | 2 | 2 | 1 |
| 1 | 2 | 2 | 2 | 1 |
| 1 | 1 | 1 | 1 | 1 |

After dilation, the edges need to be eroded using an erosion operator, to preserve the original edge position. An example of an edge erosion operator is shown in table 2.

**Table 2, edge erosion operator.**

| | | |
|---|---|---|
| 0 | 1 | 0 |
| 1 | 1 | 1 |
| 0 | 1 | 0 |

The dilation can also be performed by a Gaussian operator. The corresponding erosion operator is in that case a Laplace-operator..

In step 204 edges of the display device are determined using an edge detector operator. An example of such an operator is shown in table 32 below.

**Table 3, edge detection operator.**

| | | |
|---|---|---|
| 0 | 12 | 0 |
| 12 | 0 | 12 |
| 0 | 12 | 0 |

The edge determined using the edge detection operator from table 2 can be subjected to a threshold using a comparator function.

The skilled person in the art of image processing will understand that two dimensional operators as described above operate by means of convolution across an image under processing.

In step 205 curve fitting algorithms can be used to fit lines with the determined edges of the display area.

In step 206.angles are determined of sections of the detected edge. By detection the angles, the resulting edges sections are known as line segments.

From the line segments, corners are determined at intersections of the line segments. The corners, i.e. intersections of the line segments provide the characteristics of a bounding rectangle. The bounding rectangular describes the smallest rectangle circumscribing the display area. In this capacity, the bounding rectangle is the first estimate of the display area.

When a lens has distortion like barrel or pincushion distortion, the display area will not appear as a rectangle. In the past a real world calibration would solve this, but it is a cumbersome method and often not even accurate enough for this application. The bounding rectangle may be corrected for barrel or cushion distortion.

In step 207 the display area can be geometrically converted to a geometrically normalized virtual image of the display area having a rectangular shape, using the bounding rectangle. The bounding rectangle is used to create a geometrical conversion matrix, wherein the positions of the pixels of the camera image within the bounding rectangle are converted to pixel positions relative to the bounding rectangle using the position and orientation of the bounding rectangle relative to the camera image.

With the conversion matrix the pixel positions can be compensated for any optical deformation by the camera and optical system. The converted image comprising the display area may be resampled in order to create a virtual display area, i.e the area of the display which is to be inspected, for further measurements.

Moreover, the geometrical conversion may also include scaling of the underlying image to a normalized size, vertically and horizontally. The normalized virtual image of the display area can subsequently be resampled using interpolation according to a virtual grid or coordinates along the respective axes of the virtual normalized image.

In step 208 the outer circumference of the display area within the bounding rectangle, i.e. display information. It may be determined by from the corners at the edge of the display area as determined in step 206. Within this circumference analyses of the display area is to be performed, leaving any parts of the virtual image outside of the circumference undetermined.

In step 209 display area luminance uniformity data are extracted using the display area information. Within the display area, non-uniformity in luminance is to be established. A minimum luminance value and a maximum value may for example be established and a difference between the two as a measure of non-uniformity. Moreover, the generated data can for example be presented in a luminance non-uniformity image as will be discussed below.

This measure may then input to the extraction routines which extract each pixel based on that information. This may involve resampling the pixels from the display area using the display information.

This also means that when a display is tilted that the pixel size left and pixel size right may be different. The extract algorithm takes care of that.

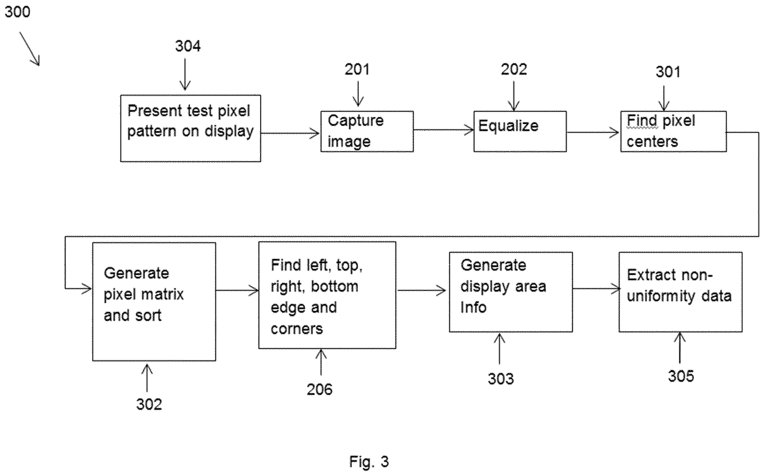

Fig. 3. shows a block diagram for an alternative method 300 of inspection of a display device. This method does not depend on edge finding but finds pixel centers instead. This can be done using all pixels or part of the pixels (like a chess pattern for example). A standard particle finding algorithm will return the center of mass of each pixel and from that information the corner points are determined.

The camera image in this case reveals a clear gap between the pixels. A control system causes a test image to be presented in step 304 on the display of the display device 105 prior to capturing an image of the display device 105. The test image may comprise single pixels or groups of pixels which constitute one of, and not limited to, squares of multiple illuminated pixels alternated with dark squares, alternating on and off pixels, alternating single 'on' pixels and multiple off pixels, green/white data on even or uneven rows.

In this alternative method 300, the steps 201, 202, 206, from fig. 2 apply. After capturing and equalizing the image in steps 201 and 201, in step 301 pixel center locations are found and put in a list of pixel center locations.

From the list of pixel center locations, in step 302 the list of pixel center locations is sorted and the pixel structure as presented on the display is used to determine the position of each sub-pixel using interpolation for intermediate particles or pixels and extrapolation for pixel locations near the edge of the display area.

In step 303, display area information is determined containing the corner points of the display area The corner points may include polygon information from which geometrical transformation matrices can be generated that are necessary to convert the equalized image to extracted information in array format.

In step 305, data are extracted relating to uniformity of the luminance within the display area, comparable to step 209 in fig. 2. Non-uniformity functions can be applied to detect non-uniformity in the luminance within the display area such as missing or dead pixels can be detected using the converted equalized image. The data extraction is performed in step 305 on the basis of the sorted list of pixels within the display area. The luminance of these pixels is analyzed relative to neighboring pixels. The generated data can for example be presented in a luminance non-uniformity image.

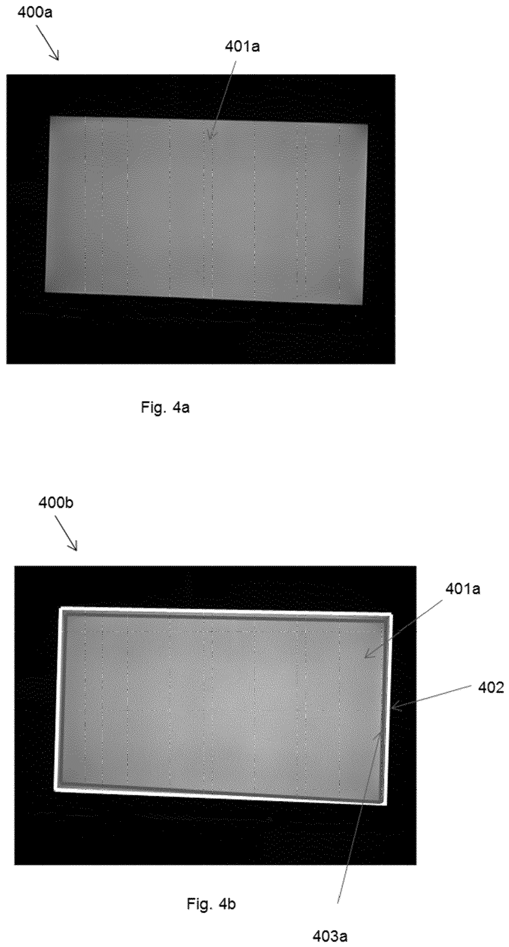

Figures 4a - 4c show images used in the method of inspection 200 of fig. 2 of a display device 105.

In fig. 4a, an image 400a of a display device as captured according to the method described above is shown in a dark background. The image 400a as shown exhibits a display area 401 a having corners which are darker than the center portion of the image. The image 400a is equalized in step 202 to obtain a uniform contrast and to eliminate noise.

In fig. 4b an image 400b derived from image 400a of fig. 4a is shown wherein an edge is determined in step 204 of fig. 2. The edge can be used to determine in steps 205 and 206 corners of a bounding rectangle, which may be converted into the bounding rectangle 402 in step 207. The display area 401 a, the area of the display which is to be inspected, is determined from the display area edge 403a.

Since images in computer graphics are usually square, the bounding rectangle 402 is used to extract information and displaying it. Areas outside the display area (but within the bounding rectangle 402) are marked as such.

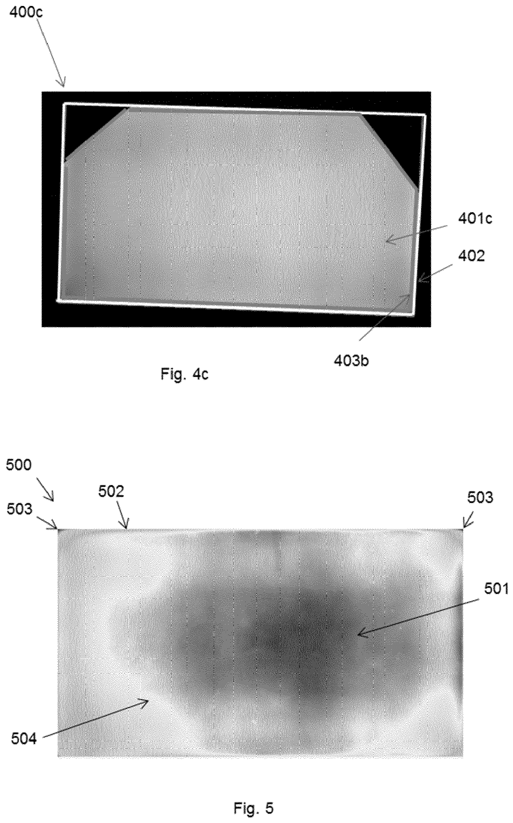

In fig. 4c an image 400c is shown like in fig. 4b, wherein the display area edge 401c has a hexagonal shape. The inner edge 403b thereby has a hexagonal shape, within the edge defining the bounding rectangle 402.

Data extraction for the purpose of inspection can be performed by using the generated images 400b, 400c. The above described methods use a virtual resolution which may or may not be equal to the real display resolution. This is done to generate a resolution that is similar to the human eye's perceived resolution (based on the human eye Contrast Sensitivity Function as described by Barten). This means that display defects can be perceived by the system just like the human eye. For detecting non-uniformity within the display area a Mura function may be utilized.

Fig. 5 shows an example luminance non-uniformity image 500 resulting from the data extraction in step 209 of the method 200 or the data extraction 305 in the alternative method 300 of inspection a display device 105. In this image 500, defects such as display blackout areas 501 with lowered luminance, dark edges 502 and corners 503, and edges 504 of undesired non-uniform luminance distribution of are shown.

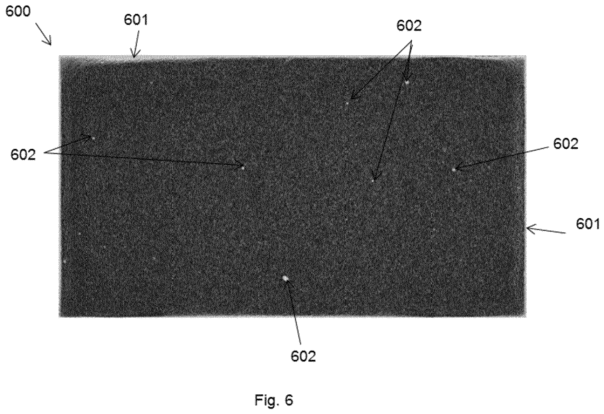

Fig. 6 shows an alternative example of a luminance non-uniformity image 600representing a so called Mura image, well known to the skilled person, from the data extraction in step 209 of the method 200 or the data extraction 305 in the alternative method 300 of inspecting a display device 105. In this image 600, defects such as a deviating display edge 601 are shown, as well as dead pixels 602 which show up in this image 600 as light spots.

It will be clear to a person skilled in the art that the scope of the present invention is not limited to the examples discussed in the foregoing but that several amendments and modifications thereof are possible without deviating from the scope of the present invention as defined by the attached claims. In particular, combinations of specific features of various aspects of the invention may be made. An aspect of the invention may be further advantageously enhanced by adding a feature that was described in relation to another aspect of the invention. While the present invention has been illustrated and described in detail in the figures and the description, such illustration and description are to be considered illustrative or exemplary only, and not restrictive.

The present invention is not limited to the disclosed embodiments. Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference numerals in the claims should not be construed as limiting the scope of the present invention.

**REFERENCE NUMERALS**

| | |
|---|---|
| 100 | Inspection system |
| 101 | Imaging device |
| 102 | Processing unit |
| 103 | Output unit |
| 104 | Product carrier |
| 105 | Display device |
| FOV | Field-of-view |
| 200 | Method for inspecting a display device |
| 201 | Capturing an image of the display device |
| 202 | Equalize contrast |
| 203 | Smoothing edges |
| 204 | Determine line coordinates |
| 205 | Determine angles |
| 206 | Determine corners |
| 207 | Create conversion matrices |
| 208 | Determine angles |
| 209 | Extract data |
| 300 | Alternative method for inspecting a display device |
| 301 | Find pixel center |
| 302 | Generate pixel matrix and sort |
| 303 | Generate display area information |
| 304 | Present a test image on the display |
| 305 | Extract data |
| 400a | Captured image |
| 401a | Display area |
| 400b | Image of rectangular display with edges |
| 402 | Bounding rectangle |
| 403a, 403b | Display area edge |
| 400c | Image of hexagonal display with edges |
| 500, 600 | Resulting image after inspection |
| 501 | Blackout area |
| 502 | Dark edge |
| 503 | Dark corner |
| 504 | non-uniform luminance distribution edge |
| 601 | Deviating display edge |
| 602 | Dead pixels |

## Claims

1. Method (200, 300) for inspecting a display device, comprising
• providing the display device on a product carrier;
• positioning the display device in a viewing field of an imaging device;
• activating the display;
• capturing an image of the activated display device by the imaging device to obtain a captured image representing the display;
• determining a display area from the captured image;
• performing an inspection function within the display area.

2. Method (200, 300) according to claim 1, wherein determining a display area from the captured image comprises:
• equalizing the luminance of the captured image.

3. Method (200, 300) according to any one of the preceding claims, wherein the determining a display area from the captured image comprises:
• converting the captured image to a binary image;

4. Method (200, 300) according to any one of the preceding claims, wherein the determining a display area from the captured image comprises
• determining an edge from the captured image;
• determining a polygon from the edge.

5. Method (200, 300) according to claim 4, wherein the performing an inspection function on the display area comprises:
• determining the luminance non-uniformity image within a portion of the captured image enveloped by the polygon.

6. Method (200, 300) according to any one of the preceding claims, further comprising
• determining an bounding rectangular from the polygon.

7. Method (200, 300) according to any one of the preceding claims, further comprising:
• determining a geometrical conversion matrix using the bounding rectangle.
• geometrically converting the pixels within the display area using the geometrical conversion matrix to obtain a geometrically normalized image representing the display.

8. Method (200, 300) according to claim 7, wherein the geometrical normalized image representing the display has a rectangular circumference.

9. Method (200, 300) according to claim 7 or claim 8, further comprising:
• determining a scaling matrix using the geometrically normalized image representing the display and a second reference image;
• converting the normalized area of the normalized image representing the display using the scaling matrix to obtain a scaled image representing the display.

10. Method (200, 300) according to any of the preceding, further comprising:
• determining a human visualization conversion matrix using a human visual system model;
• converting the display area using the human visualization conversion matrix to obtain a human visualization image representing the display.

11. Method (200, 300) according to claim 8, wherein the performing an inspection function on the display area comprises determining the luminance non-uniformity image from the human visualization image representing the display.

12. Method (200, 300) according to any one of the preceding claims, further comprising outputting the luminance non-uniformity image.

13. System (100) for inspecting a display device (105), comprising:
• a product carrier (104) for carrying the display device (105);
• activation means for activating the display device (105);
• an imaging device 101), arranged relative to the product carrier (104), for capturing an image of the display device (105) on the product carrier within a viewing angle (FOV) of the imaging device (101);
• a processing unit (102) connected to the imaging device (101) for receiving the captured image and for processing the captured image, wherein the processing unit (101) is provided with computer instructions which when executed in the processing unit perform the steps of the method (200, 300) according to any one of the claims 1 - 12.
